# EUROPÄISCHE PATENTSCHRIFT

(11) **EP 2 805 042 B1**
(45) Veröffentlichungstag und Bekanntmachung des Hinweises auf die Patenterteilung: **04.05.2016**
(21) Anmeldenummer: 13700275.4
(22) Anmeldetag: 07.01.2013
(51) Int. Cl.: F03B 11/00

(54) **VORRICHTUNG ZUM ERFASSEN DES ABRASIVEN VERSCHLEISSES**
DEVICE FOR DETECTING ABRASIVE WEAR
DISPOSITIF POUR DÉTECTER L'USURE PAR ABRASION

(30) Priorität: 20.01.2012 DE 102012000988
(43) Veröffentlichungstag der Anmeldung: 26.11.2014
(73) Patentinhaber: Voith Patent GmbH, 89522 Heidenheim (DE)
(72) Erfinder: KRATZSCH, Axel, 89174 Altheim (DE); CHRIST, Daniel, 89522 Heidenheim (DE); SCHOPPA, Jan, 89079 Ulm (DE)
(74) Vertreter: Dr. Weitzel & Partner
(86) Internationale Anmeldenummer: PCT/EP2013/050144
(87) Internationale Veröffentlichungsnummer: WO 2013/107664

(56) Entgegenhaltungen:
- EP-A1- 1 970 561
- JP-A- H08 326 645
- US-A1- 2011 014 049

## Beschreibung

Die Erfindung betrifft eine Vorrichtung zum Erfassen des abrasiven Verschleißes an Bauteilen von Wasserturbinen nach der im Oberbegriff von Anspruch 1 näher definierten Art. Ferner betrifft die Erfindung ein Wasserkraftwerk mit einer derartigen Vorrichtung. Die Erfindung betrifft letztlich außerdem ein Verfahren zum Erfassen des abrasiven Verschleißes in einem Wasserkraftwerk mit einer solchen Vorrichtung.

Wasserumströmte Bauteile, insbesondere Bauteile der Turbine wie beispielsweise Leitschaufeln und Turbinenschaufeln, werden durch Sedimente, welche in dem strömenden Wasser vorhanden sind, sehr stark abgenutzt. Diese Erosion von wasserumströmten Bauteilen in Wasserkraftwerken durch die im Fluss mitgeführten Sedimente ist dabei insbesondere in südamerikanischen Ländern und in Indien, sowie in der Alpenregion ein großes Problem. Zum einen verursacht dieser durch die Sedimente verursachte abrasive Verschleiß an Bauteilen der Wasserturbine zusätzliche Wartungsarbeiten und einen reduzierten Wirkungsgrad des Wasserkraftwerks. Dies ist mit teilweise sehr hohen wirtschaftlichen Verlusten für den Betreiber verbunden. Zum anderen können durch den abrasiven Verschleiß Geometrien der verschleißenden Bauteile mit der Zeit verändert werden. Dies kann zu erheblichen Sicherheitsrisiken durch eine Verminderung von Wandstärken und daraus resultierenden Vibrationen führen. Neben einem Verschleiß von Leitschaufeln und Turbinenschaufeln tritt durch die Sedimente typischerweise außerdem ein Verschleiß der Dichtungen im Bereich der Wasserturbine auf. Diese normalerweise als Labyrinthdichtungen ausgeführten Dichtungen stellen ebenfalls Bauteile der Wasserturbine dar, welche einem erhöhten Verschleiß unterliegen. Auch für sie gelten die nachfolgend beschriebenen Ausführungen analog. Ein übermäßiger Verschleiß einer Dichtung kann zu erhöhter Reibung und/oder zu ungewollten Leckagen im Bereich der Turbine führen.

Bisher basiert das Wissen um den Verschleißzustand einer Wasserturbine zumeist auf einer langjährigen Erfahrung des Betreibers des Wasserkraftwerks. Eine direkte Zustandskontrolle ist meist nur dann möglich, wenn die Wasserturbine ohnehin zu Wartungszwecken einen geplanten Stillstand hat und als ganzes geöffnet wird. Außerhalb von geplanten Wartungsstillständen wäre eine Zustandskontrolle durch einen zusätzlichen Stillstand der Wasserturbine jedoch sehr kostenintensiv.

Eine weitere Problematik bei der Abschätzung des abrasiven Verschleißes liegt darin, dass Werte nicht oder kaum von der einen Anlage auf eine andere Anlage übertragen werden können. Die Menge und die Zusammensetzung des im Wasser mitgeführten Sediments ist regional sehr unterschiedlich und ist starken zeitlichen und jahreszeitlichen Schwankungen unterworfen. Die Menge und Art des Sediments hängt außerdem von geologischen, topographischen sowie klimatischen Randbedingungen ab. Dies macht eine Abschätzung außerordentlich schwierig. Auch ein indirekter Rückschluss auf den Verschleiß an Bauteilen der Wasserturbine beispielsweise durch eine Sedimentmessung ist außerordentlich aufwendig und mit sehr großen Unsicherheiten und Fehlern behaftet.

Die europäische Patentanmeldung EP 1 970 561 A1 versucht daher eine Vorrichtung anzugeben, welche den Verschleißzustand der Wasserturbine über Versuchskörper in einem parallelen Strömungsweg des mit Sediment beladenen Wassers erfasst und diese Versuchskörper beispielsweise über Kameras oder andere nicht näher spezifizierte Messverfahren untersucht, um indirekte Rückschlüsse auf den Verschleiß der Bauteile der Wasserturbine zu ermöglichen. Dazu wird der Verschleiß an Versuchskörpern bestimmt, die über einen Bypass mit sedimenthaltigem Wasser beaufschlagt werden. Der Nachteil besteht darin, dass dieser Bypass ein Druckgefälle für eine Zwangsdurchströmung benötigt. Daher sind aufwändige Umbauten für eine Messkammer mit geregelter Wasserzufuhr notwendig. Die aus der Strömung entnommene Menge an Wasser muss außerdem nach dem Auftreffen auf den Versuchskörper entsprechend wieder abgeführt werden. Um dies zu erreichen ist die Anordnung als Bypass im Bereich der Druckleitung, des sogenannten Penstock, vorgesehen. Dies stellt jedoch einen weiteren Nachteil dar, da der Abtrag an dem Versuchskörper sehr stark vom Ort der Wasserentnahme im Penstock abhängt. Dies ist von entscheidender Bedeutung, da der Ort der Wasserentnahme entscheidend für die Menge an Sediment ist, da dieses sich in der Druckleitung typischerweise nicht gleichmäßig verteilt. Die Ergebnisse zu interpretieren ist also entsprechend schwierig. Ein weiteres Problem besteht darin, dass die Ergebnisse sehr stark vom eingestellten Druckgefälle innerhalb der Messanordnung abhängen.

Ferner ist eine Wasserentnahme aus der Druckleitung hinsichtlich der Festigkeit und Funktionalität der Druckleitung eher kritisch. Eine solche Wasserentnahme aus der Druckleitung kann beispielsweise nachträglich nur unter extrem hohem Aufwand in einen bestehenden Aufbau eingebaut werden, sondern muss von Anfang an aufgrund der komplexen baulichen Situation und einer hierfür geeignet ausgelegten Druckleitung mit eingeplant sein. Das Verfahren ist damit sehr aufwändig und dennoch recht ungenau.

Ein weiterer Nachteil des in der europäischen Patentanmeldung beschrieben Aufbaus besteht darin, dass dieser nicht in der Lage ist, auf unterschiedliche Betriebszustände, also unterschiedliche Lastzustände der Wasserturbine, zu reagieren. Die Wassermenge, welche auf den Versuchskörper auftrifft, ist im Bypass bei Entnahme aus dem Penstock lediglich durch die Druckdifferenz zwischen dem Penstock und der Messkammer sowie dem Querschnitt des Bypassbeziehungsweise des Düsenauslass abhängig. Eine zusätzliche Regelung, beispielsweise bei Teillast der Wasserturbine, ist nicht oder nur durch ein zusätzliches aktiv in Abhängigkeit des Lastzustands der Wasserturbine ansteuerbares Ventil möglich. Dies ist entsprechend aufwändig und erhöht die Gefahr der Ungenauigkeiten weiter.

Die Aufgabe der hier vorliegenden Erfindung besteht nun darin, eine Vorrichtung zum Erfassen des abrasiven Verschleißes an Bauteilen von Wasserturbinen anzugeben, welche diese Nachteile vermeidet und einfach, effizient und zuverlässig Rückschlüsse auf den Verschleiß im Bereich der Bauteile der Wasserturbine zulässt.

Erfindungsgemäß wird diese Aufgabe mit einer Vorrichtung gelöst, welche die Merkmale im kennzeichnenden Teil des Anspruchs 1 aufweist. Ein Wasserkraftwerk mit einer derartigen Vorrichtung ist außerdem im Anspruch 8 angegeben. Ferner ist ein Verfahren zum Erfassen des abrasiven Verschleißes im Sinne der Erfindung im Anspruch 14 angegeben. Vorteilhafte Weiterbildungen und Ausgestaltungen der Vorrichtung, des Wasserkraftwerks und des Verfahrens ergeben sich aus den abhängigen Unteransprüchen.

Die erfindungsgemäße Lösung der Vorrichtung zum Erfassen des abrasiven Verschleißes sieht einen Verschleißkörper vor, welcher direkt in der die Wasserturbine durchströmenden Strömung angeordnet ist. Der Verschleißkörper wird deshalb immer mit genau dem Wasser in der Menge und der Zusammensetzung beaufschlagt, wie auch die entsprechenden Bauteile der Turbine, auf deren Verschleiß zurückgeschlossen werden soll. Der Verschleißkörper selbst ist dabei als Sonotrode ausgebildet und mit einem Ultraschallerzeuger verbunden. Ein solcher als Sonotrode eines Ultraschallsensors ausgebildeter Verschleißkörper hat dabei den entscheidenden Vorteil, dass die Eigenfrequenz des Ultraschallsensors sich in Abhängigkeit einer Massenabnahme an der Sonotrode entsprechend erhöht. Über eine Messeinrichtung zur Messung der Eigenfrequenz zur Sonotrode kann also der Abtrag am Verschleißkörper, welcher die Sonotrode ausbildet, direkt und unmittelbar gemessen werden.

Durch geeignete Verschleißkörper und aufgrund der Anordnung des Verschleißkörpers in genau der Strömung, in welcher die Bauteile der Turbine ebenfalls sind, kann so eine sehr genaue und zuverlässige Messung realisiert werden. Die Sonotrode erfährt dabei nur den Abtrag, der auch durch tatsächlich durch die Wasserturbine gelangende Sedimente erzeugt wird. Eine Korrelation des Abtrags des Sensors und der Bauteile ist daher sehr einfach und zuverlässig möglich. Die Korrelation kann beispielsweise durch einen Vergleich des Bauteilabtrags mit dem Abtrag der Sonotrode im Rahmen von ohnehin stattfindenden Revisionen erfolgen. Sie lässt sich jedoch auch mittels vergleichender CFD-Berechnungen durchführen. Hierbei wird das Abtragverhalten der Sonotrode im Vergleich zum Abtragverhalten am Bauteil berechnet. Der Sonotrodenabtrag dient dabei als Kalibriermaß für die Abtragsberechnung am Bauteil.

In einer besonders günstigen und vorteilhaften Weiterbildung der erfindungsgemäßen Vorrichtung ist es dabei vorgesehen, dass die Sonotrode in die von der Wasserturbine abströmende Strömung ragt. Insbesondere die Strömung nach der Wasserturbine, also im Bereich des sogenannten Saugrohrs eines Wasserkraftwerks, enthält im Vergleich zur Druckleitung in annähernd jedem Bereich ihres Querschnitts eine vergleichbare Zusammensetzung von Sedimenten und Wasser. Außerdem weist die Strömung auch nach der Turbine noch eine sehr hohe Strömungsgeschwindigkeit auf. Damit ist in diesem Bereich der Einbau der Sonotrode der erfindungsgemäßen Vorrichtung von besonderem Vorteil. Ein weiterer Vorteil besteht darin, dass die baulich sicherheitsrelevante Druckleitung unangetastet bleibt und der Einbau der Sonotrode im Bereich nach der Turbine, bei entsprechend geringerem Druckniveau, erfolgt.

Die Sonotrode selbst kann dabei gemäß einer vorteilhaften Ausgestaltung der erfindungsgemäßen Vorrichtung aus einem zylindrischen Verschleißkörper mit einem Anschlusselement zum Verbinden mit dem Ultraschallerzeuger ausgebildet sein. Dieser zylindrische Aufbau, welcher insbesondere noch über ein kugeliges Ende auf der dem Ultraschallerzeuger abgewandten Seite verfügen kann, ist besonders einfach und effizient und gegenüber größeren Teilen in der Strömung, beispielsweise mitgerissenen Steinen oder Ästen, welche durch die Turbine gelangen, vergleichsweise unempfindlich. Dennoch sind selbstverständlich auch andere Formen der Sonotrode, beispielsweise ein Hohlzylinder oder eine flügelförmige Ausgestaltung, denkbar und möglich.

Die Sonotrode selbst kann gemäß einer besonders günstigen und vorteilhaften Weiterbildung der erfindungsgemäßen Vorrichtung aus einem Stahlwerkstoff bestehen, insbesondere aus Chrom-Nickel- oder Chrom-Nickel-Molybdän-Stahl. Ein solcher Aufbau aus einem Stahlwerkstoff, insbesondere dem Werkstoff, aus dem die Bauteile der Turbine ebenfalls gefertigt sind, erlaubt einen guten Rückschluss auf den Abtrag der Bauteile der Wasserturbine im Verhältnis zum Abtrag im Bereich der Sonotrode aufgrund der annähernd gleichen Verschleißcharakteristik. Bevorzugte Materialien können hier beispielsweise Stähle mit den Nummern 1.4313 beziehungsweise 1.4317 sein.

In einer alternativen Ausgestaltung der erfindungsgemäßen Vorrichtung kann es jedoch auch vorgesehen sein, dass die Sonotrode aus einem Nichteisenmetall, insbesondere aus einer Aluminium- oder Kupferlegierung, ausgebildet ist. Solche Aluminium- oder Kupferlegierungen haben eine deutlich geringere Abrasionsbeständigkeit als die typischerweise eingesetzten Stahlwerkstoffe der wasserführenden Bauteile der Wasserturbine. Dies ermöglicht für die Messung eine höhere zeitliche Auflösung des Abtrags. Dies ist insbesondere dann von Vorteil, wenn die schädigende Wirkung von Einzelereignissen, beispielsweise einer Flut, eines gezielten Ablassens von Sedimenten durch die Turbine, eine Funktionsreduzierung beziehungsweise eines Funktionsausfalls eines Entsanders oder dergleichen, erfasst werden sollen. Aufgrund des schnelleren Abtrags im Bereich des Verschleißkörpers des Sensors gegenüber den wasserführenden Bauteilen ist eine höhere Auflösung der Messung möglich, wodurch auch solche Einzelereignisse viel leichter erkannt werden können.

In einer weiteren Ausgestaltung der erfindungsgemäßen Vorrichtung kann es ferner vorgesehen sein, dass die Sonotrode zumindest teilweise mit einer Hartstoffbeschichtung versehen ist. Solche Hartstoffbeschichtungen sind mittlerweile gängig, um beispielsweise die Stahlbauteile der Wasserturbine möglichst lange gegen Verschleiß abzusichern. Wenn solche Bauteile eingesetzt sind, dann kann es von besonderem Vorteil sein, wenn auch die Sonotrode entsprechend ausgebildet ist, um beispielsweise die Verschleißcharakteristik der Bauteile der Turbine möglichst genau nachzubilden. Außerdem können über eine solche beschichtete Sonotrode die Standzeiten der Beschichtungen im Bereich der Wasserturbinen erfasst und auf den Messwerten basierend die benötigten Wartungen vorgeplant werden. Dies gilt insbesondere, wenn die Hartstoffbeschichtung auf einem Material angebracht ist, welches ansonsten sehr schnell abgetragen wird, beispielsweise auf einer aus einer Aluminiumlegierung oder aus Bronze aufgebauten Sonotrode. Solange die Hartstoffschicht unbeschädigt ist, tritt dann ein sehr geringer Abtrag auf. Bei einer Beschädigung der Hartstoffschicht steigt die Abtragsrate und damit die Eigenfrequenz der Sonotrode schlagartig an. Dies lässt sich sehr leicht und zuverlässig detektierten.

Bei dem erfindungsgemäßen Wasserkraftwerk ist es vorgesehen, dass dieses wenigstens eine Wasserturbine aufweist, welche zwischen einem Druckrohr in Strömungsrichtung vor der Wasserturbine und einem Saugrohr in Strömungsrichtung nach der Wasserturbine angeordnet ist. Neben der wenigstens einen Wasserturbine können selbstverständlich auch weitere Wasserturbinen vorhanden sein. Außerdem weist das erfindungsgemäße Kraftwerk wenigstens eine Vorrichtung zum Erfassen des abrasiven Verschleißes nach der vorher bestimmten Art auf. Eine solche Vorrichtung zur Erfassung des abrasiven Verschleißes kann insbesondere im Bereich von jeder der Wasserturbinen oder auch im Bereich lediglich einer Wasserturbine angeordnet sein, wenn zu erwarten ist, dass die Wasserturbinen, sofern mehrere vorhanden sind, mit Wasser und Sediment in derselben Zusammensetzung angeströmt werden. Ferner ist es selbstverständlich möglich, falls eine homogene Verteilung von Wasser und Sediment nicht zu erwarten ist, beispielsweise wenn die Vorrichtung zur Erfassung des abrasiven Verschleißes im Bereich des Druckrohrs installiert wird, dass über den Umfang und eine gewisse Lauflänge des Druckrohrs mehrere derartige Sonotroden verteilt werden, um beispielsweise durch eine Mittelwertbildung oder eine gewichtete Mittelwertbildung vergleichsweise gute Rückschlüsse auf den Verschleiß der Wasserturbine zu erhalten.

In einer besonders günstigen Ausgestaltung des erfindungsgemäßen Wasserkraftwerks ist es dagegen vorgesehen, dass die Sonotrode der Vorrichtung im Saugrohr angeordnet ist. Eine solche Anordnung im Saugrohr, also nach der Wasserturbine, ist von besonderem Vorteil, da hier die Druckverhältnisse sehr viel günstiger zum Einbringen einer Öffnung in das Saugrohr und zum Abdichten derselben um die Sonotrode herum sind. Bei einer Anordnung, insbesondere vergleichsweise dicht hinter der Turbine, sind die Strömungsgeschwindigkeiten dennoch so hoch, dass ein zuverlässiger Wert für den Verschleiß erzielt wird. Nach der Turbine ist außerdem das Wasser sehr gut mit den Sedimenten vermischt, sodass im Bereich des Saugrohrs annähernd überall dieselbe Verteilung der Sedimente im Wasser vorliegt.

In einer besonders günstigen Weiterbildung hiervon kann die Sonotrode dabei in einem geringen Abstand, von vorzugsweise weniger als 2-3m, in Strömungsrichtung nach der Wasserturbine angeordnet sein. Dieser vergleichsweise geringe Abstand zum Übergang zwischen der Wasserturbine und dem Saugrohr ist von entscheidendem Vorteil, da hier die Strömungsbedingungen, insbesondere die Geschwindigkeit nach der Turbine noch so hoch ist, dass zuverlässige Messergebnisse zu erwarten sind. Im weiteren Verlauf des Saugrohrs ist mit größerem Abstand der Sonotrode von der Wasserturbine eine Verschlechterung der Messwerte zu erwarten. Ursachen hierfür sind einerseits ein zunehmendes Absinken der Sedimente in der Wasserströmung nach unten, je weiter die Strömung sich von der Turbine entfernt. Außerdem reduziert sich die Strömungsgeschwindigkeit mit zunehmendem Abstand von der Turbine. Da die Strömungsgeschwindigkeit einen erheblichen Einfluss auf den Abtrag hat, sollte durch die Anordnung in einem möglichst geringen Abstand nach der Wasserturbine einer Verringerung der Strömungsgeschwindigkeit im Bereich der Sonotrode nach Möglichkeit entgegengewirkt werden.

In einer weiteren sehr günstigen Ausgestaltung des erfindungsgemäßen Wasserkraftwerks ist es außerdem vorgesehen, dass die Sonotrode stromabwärts eines Strömungsteilers angeordnet ist. Ein solcher Strömungsteiler oder Splitter, welcher beispielsweise als Blechelement im Bereich des Saugrohrs in Strömungsrichtung vor der Sonotrode ausgebildet sein kann, kann gröbere Teile wie beispielsweise Steine, Äste und dergleichen von der Sonotrode fernhalten und diese von der Sonotrode ablenken. Dennoch wird die Sonotrode mit dem sedimenthaltigen Wasser umspült und erlaubt so, ohne die Gefahr einer baulichen Beschädigung, ein sehr zuverlässiges Erfassen des abrasiven Verschleißes.

Alternativ oder ergänzend zu dem Strömungsteiler kann es auch vorgesehen sein, dass die Sonotrode in einem von der Strömung durchströmten Rohrabschnitt innerhalb des oder parallel zu dem Saugrohr angeordnet ist. Ein solcher Rohrabschnitt kann gemäß einer vorteilhaften Ausgestaltung insbesondere als Halbrohr ausgebildet sein, welches an der Wandung des Saugrohrs befestigt ist. Damit ist ein guter Schutz der Sonotrode vor Steinen, Ästen und dergleichen gewährleistet und diese wird dennoch sicher und zuverlässig von mit Sediment beladenem Wasser mit denselben Strömungsbedingungen und derselben Geschwindigkeit wie der Rest des Saugrohrs umströmt. Prinzipiell ist es auch denkbar, einen Rohrabschnitt vom Saugrohr abzuzweigen und diesen parallel zu führen. Dies ist jedoch baulich aufwendiger.
Ein erfindungsgemäßes Verfahren zum Erfassen des abrasiven Verschleißes in einem Wasserkraftwerk nach einer der beschriebenen Ausgestaltungen sieht es nun vor, dass mittels der Messeinrichtung die Eigenfrequenz der Sonotrode gemessen wird, wobei eine aufgrund des Materialabtrags an der Sonotrode ansteigende Eigenfrequenz als Maß für einen zunehmenden Verschleiß von Bauteilen der Wasserturbine des Wasserkraftwerks verwendet wird. Dieses Verfahren entspricht dem oben bei der Vorrichtung bereits beschriebenen bevorzugten Verwendungszweck. Das Verfahren ermöglicht eine sichere und zuverlässige Aussage über den Verschleiß im Bereich der Bauteile der Wasserturbine durch einen Rückschluss aufgrund des Verschleißes im Bereich der Sonotrode. Da die Eigenfrequenz der Sonotrode einfach und effizient gemessen werden kann, ist dabei eine ununterbrochene Messung ebenso möglich, wie eine Messung in vorgegebenen Zeitabständen. Diese können entsprechend eng oder auch als größeres zeitliches Intervall gewählt werden. Aufgrund des Abtrags des Materials der Sonotrode ändert sich die gemessene Eigenfrequenz von Messung zu Messung beziehungsweise über der Zeit. Eine ansteigende Eigenfrequenz an der Sonotrode ist dann ein geeignetes Maß für den Verschleiß der Sonotrode und lässt sehr präzise Rückschlüsse auf den Verschleiß der Bauteile der Wasserturbine, welche von selben Wasser und Sediment unter den selben Strömungsbedingungen umströmt sind, zu. Eine fortwährende Beobachtung des Verschleißzustandes wird somit möglich, sodass Wartungsintervalle entsprechend frühzeitig geplant und insbesondere mit ohnehin anstehenden Wartungen zusammengelegt werden können. Ausfälle der Wasserturbine können somit verhindert werden und Wartungskosten können aufgrund der möglichen Optimierung und einer Zusammenlegung von turnusgemäßen Wartungen und verschleißbedingten Wartungen verringert werden.

In einer besonders günstigen Weiterbildung des erfindungsgemäßen Verfahrens ist es außerdem vorgesehen, dass ein mit dem Verschleiß korrelierendes Messsignal an eine Fernwartungseinrichtung übertragen wird. Die Einbindung des Sensorsignals in eine Automatisierungseinrichtung des Wasserkraftwerks ist selbstverständlich. Nun ist es ferner möglich, ein mit dem Verschleiß korrelierendes Messsignal über eine Fernwartungseinrichtung oder eine Remote-Kontrolle, also den Fernbetrieb des Kraftwerks, beispielsweise per Internet-Verbindung, einzubinden, und das mit dem Verschleiß korrelierende Messsignal an die Fernwartungseinrichtung zu übertragen. Hierdurch ist es möglich, örtlich unabhängig vom Kraftwerk eine Auswertung des entsprechenden Signals vorzunehmen. Hierdurch kann eine Einbindung in die Fernwartung mit gegebenenfalls sehr komplexer und sich häufig aktualisierender Software im Bereich der Fernwartungseinrichtung realisiert werden. Außerdem können notwendige Wartungsarbeiten im Rahmen der Fernwartung koordiniert werden. Sie können beispielsweise Teil eines Servicevertrags sein, bei welchem der Servicevertragspartner über die Fernwartung Zugang zu den entsprechenden Verschleißdaten beziehungsweise den mit ihnen korrelierenden Messwerten jederzeit und an jedem beliebigen Ort hat.

Weitere vorteilhafte Ausgestaltungen der erfindungsgemäßen Vorrichtung sowie eines erfindungsgemäßen Wasserkraftwerks und des erfindungsgemäßen Verfahrens ergeben sich aus den restlichen abhängigen Unteransprüchen und werden anhand des Ausführungsbeispiels deutlich, welches nachfolgend unter Bezugnahme auf die Figuren näher beschrieben wird.

Dabei zeigen:
- Figur 1: einen Ausschnitt aus einem erfindungsgemäßen Wasserkraftwerk;
- Figur 2: eine vergrößerte Prinzipdarstellung der Vorrichtung zum Erfassen des abrasiven Verschleißes;
- Figur 3: eine mögliche Ausführungsform eines Vershleißkörpers;
- Figur 4: eine weitere mögliche Ausführungsform des Verschleißkörpers; und
- Figur 5: eine weitere alternative Ausführungsform des Verschleißkörpers.

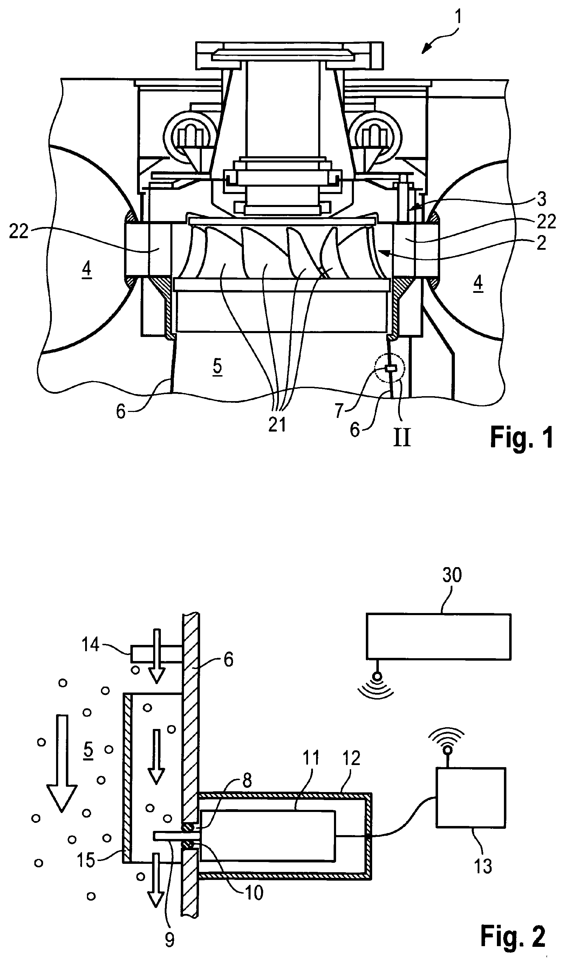

In der Darstellung der Figur 1 ist ein Ausschnitt aus einem Wasserkraftwerk 1 beispielhaft angedeutet. Kern dieses Wasserkraftwerks 1 ist eine Wasserturbine 2, welche hier beispielhaft als Francis-Turbine ausgebildet ist. Die Francis-Turbine ist dabei rein beispielhaft zu verstehen. Die Erfindung wäre ebenso bei allen anderen Turbinenarten, beispielsweise einer Kaplan-Turbine, einer Pelton-Turbine oder dergleichen in der oben beschriebenen Art und Weise denkbar. Der Fachmann kann diese vom beschriebenen Ausführungsbeispiel anhand der Francis-Turbine problemlos auf andere Typen von Wasserkraftwerkern übertragen.

Die Wasserturbine 2 umfasst neben Dichtungen im Wesentlichen zwei weitere Arten von wasserumströmten Bauteilen. Diese sind zum einen die Turbinenschaufeln 21, von welchen hier nur einige mit einem Bezugszeichen versehen sind. Außerdem sind es sogenannte Leitschaufeln 22, welche die Zufuhr des Wassers zu den Turbinenschaufeln 21 steuern. Durch den von den Leitschaufeln 22 gebildeten, die Turbine 2 umgebenden Leitkranz 3 tritt das Wasser aus einer Druckleitung 4 in die Turbine 2 ein. Von der Druckleitung 4 sind hier nur abschnittsweise zwei Teile einer den Leitkranz 3 umgebenden, die Druckleitung 4 mit der Turbine 2 verbindenden Ringleitung zu erkennen. In Strömungsrichtung des Wassers nach der Wasserturbine 2 folgt eine sogenannte Saugleitung 5, von welcher ein Teil der Wandungen 6 zu erkennen ist.

Je nach geografischer Region und Randbedingungen fließt durch die Wasserturbine 2 nun ein Gemisch aus Wasser und einer bestimmten Menge an Sedimenten. Durch diese Sedimente kommt es, wie eingangs erläutert worden ist, zu einem Verschleiß im Bereich der wasserumströmten Bauteile 21, 22 der Wasserturbine 2. Um diesen Verschleiß zu erfassen, ist in der Darstellung der Figur 1 eine Vorrichtung 7 zum Erfassen des abrasiven Verschleißes prinzipmäßig angedeutet. Diese Vorrichtung 7, welche in der Darstellung der Figur 1 mit einem Kreis umrandet ist, ist in der Darstellung der Figur 2 als der mit II bezeichnete Ausschnitt der Figur 1 nochmals vergrößert in einer Prinzipdarstellung zu erkennen.

Die Saugrohrwandung 6 weist dabei eine Öffnung 8 auf, durch welche ein Verschleißkörper 9 durch eine Dichtung 10 hindurch in das Innere des Saugrohrs 6 ragt. Der Verschleißkörper 9 ist an seinem anderen Ende mit einem Ultraschallerzeuger 11 verbunden, welcher in dem hier dargestellten Ausführungsbeispiel in ein Gehäuse 12 eingesetzt ist. Dieses Gehäuse kann so im Bereich der Wandung 6 des Saugrohrs 5 platziert werden, dass ein einfacher Austausch des Verschleißkörpers 9 und des Sensors auch im Betrieb der Anlage problemlos möglich ist. Der Ultraschallerzeuger 11 ist mit einem Frequenzgenerator verbunden, welcher gleichzeitig als Messeinrichtung 13 dienen kann. Diese Messeinrichtung 13 erfasst die Eigenfrequenz des als Sonotrode ausgebildeten mit dem Ultraschallerzeuger 11 verbundenen Verschleißkörpers 9. Kommt es nun zu einem abrasiven Verschleiß im Bereich dieser Sonotrode 9, dann steigert sich die Eigenfrequenz mit zunehmendem Verlust an Masse. Eine ansteigende Eigenfrequenz korreliert also mit einem sich erhöhenden Verschleiß. Die Sonotrode 9 ragt dabei in das Innere des Saugrohrs 6 und wird so genau von dem sedimentbeladenen Wasser in genau der Menge und Zusammensetzung umspült, wie die Bauteile 22, 23 der Wasserturbine 2. Über die Messeinrichtung 13, welche insbesondere in eine Automatisierungselektronik des Wasserkraftwerks 1 eingebunden ist, kann die Auswertung erfolgen, welche dann der Datenverarbeitung zugänglich gemacht wird. Ergänzend oder alternativ dazu kann auch eine Übertragung der Daten an eine Fernwartungseinrichtung 30 erfolgen. Die Fernwartungseinrichtung 30 ist in der Darstellung der Figur 2 prinzipmäßig angedeutet und kann beispielsweise über eine Datenleitung oder, wie hier angedeutet, über ein Funksignal mit der Messeinrichtung beziehungsweise der der Messeinrichtung 13 übergeordneten Automatisierungstechnik des Wasserkraftwerks 1 kommunizieren. Die Kommunikation hinsichtlich des Verschleißes kann einerseits mit dem bereits ausgewerteten Verschleißsignal erfolgen oder alternativ hierzu indem das Signal der Eigenfrequenz übermittelt und im Bereich der Fernwartung unabhängig vom Standort des Wasserkraftwerks 1 ausgewertet wird. Der Verschleiß kann somit in einen Fernbetrieb des Kraftwerks einfließen und kann in im Bereich der Fernwartung erstellte Wartungspläne, einen Wartungsservicevertrag oder dergleichen, eingebunden werden.

Um die Beschädigung der Sonotrode 9 durch größere Teile wie beispielsweise Steine oder Äste, welche die Turbine 2 passiert haben, zu verhindern, kann optional ein Strömungsteiler beziehungsweise -splitter 14 oder ein Halbrohr 15 oder gegebenenfalls auch beides vorgesehen sein. Hierdurch entsteht im Bereich der Sonotrode 9 eine Strömung, welche lediglich Wasser und Sedimente mit sich führt, größere Störteile werden durch das Halbrohr 15 und/oder den Strömungssplitter 14 abgeleitet. Das Halbrohr 15 und der Strömungssplitter 14 sind dabei jeweils allein denkbar und möglich. Selbstverständlich ist auch ein Aufbau, wie er in der Figur 2 dargestellt ist, denkbar und möglich. Durch die Kombination des Strömungssplitters 14 mit dem Halbrohr 15 entsteht ein Aufbau, welcher sehr sicher gegenüber sich einklemmenden Steinen, Stöcken und dergleichen realisiert ist. Dabei ist die Darstellung in der Figur 2 rein beispielhaft zu verstehen, da der Abstand zwischen dem Strömungssplitter 11 und dem Eingang des Halbrohrs 15 entsprechend der Strömungsverhältnisse angepasst werden muss und in der in Figur 2 gewählten Prinzipdarstellung eher zu klein dargestellt ist.

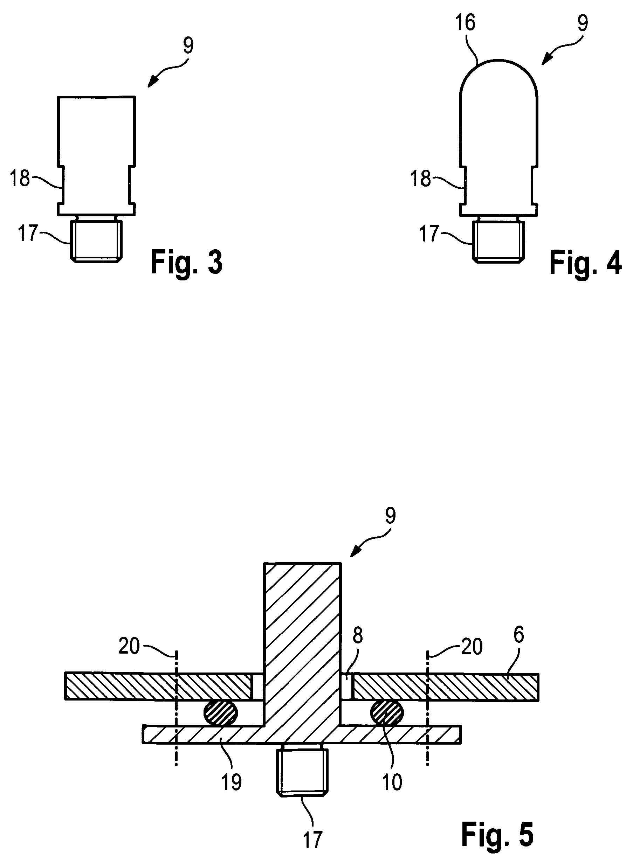

In den Darstellungen der Figuren 3, 4 und 5 sind drei mögliche bevorzugte Ausführungsformen der Sonotrode 9 zu erkennen. In der Darstellung der Figur 3 ist diese als Zylinder ausgebildet, in der Darstellung 4 weist dieser Zylinder an seinem dem Ultraschallerzeuger 11 abgewandten Ende eine kugelige Ausgestaltung 16 auf. In beiden Fällen weisen die Sonotroden 9 ein Aufnahmeelement 17 zum Verbinden der Sonotrode 9 mit dem Ultraschallerzeuger 11, welcher in den Darstellungen der Figuren 3, 4 und 5 nicht zu erkennen ist, auf. Außerdem weisen beide Sonotroden 9 eine Aufnahme 18 beispielsweise für einen geeigneten Schraubenschlüssel zum Eindrehen der Sonotrode 9 mit ihrer als Gewinde ausgebildeten Aufnahme 17 in den Ultraschallerzeuger 11 auf. Diese beiden Typen von Sonotroden 9 sind dabei insbesondere gegenüber größeren gegebenenfalls gegen die Sonotrode 9 prallenden Störteilen, wie z.B. Steinen oder Ästen sehr robust. Sie sind deshalb als bevorzugte Ausführungsformen zu verstehen, welche besonders gut für die Verwendung in der erfindungsgemäßen Vorrichtung 7 geeignet sind. Die in Figur 5 dargestellte Sonotrode 9 ist besonders günstig hinsichtlich des Einbaus in die Saugrohrwandung 6 und hinsichtlich der Abdichtung. Sie weist einen Flansch 19 auf. Zwischen dem Flansch 19 und der Saugrohrwandung 8 kommt die auch in Figur 2 bereits dargestellte Dichtung 10 zu liegen. Außerhalb der Dichtung kann dann eine angedeutete Verschraubung 20 vorgesehen sein, um die Sonotrode 9 dichtend in der Öffnung 8 der Saugrohrwandung 6 zu platzieren. Die Sonotrode 9 ist dann auch während des Betriebs einfach zugänglich und kann bei Bedarf ausgetauscht werden.

Die Sonotroden 9 können dabei frontal oder, wie in der Darstellung der Figur 2 prinzipmäßig angedeutet, seitlich angeströmt sein. In beiden Fällen kommt es zu einem abrasiven Verschleiß im Bereich der Sonotrode 9, wodurch diese an Masse verliert. Die von der Messeinrichtung 13 erfasste Eigenfrequenz der mit dem Ultraschallerzeuger 11 verbundenen Sonotrode 9 wird sich damit entsprechend erhöhen. Die sich erhöhende Eigenfrequenz ist ein Maß für den größer werdenden abresiven Verschleiß im Bereich der Sonotrode 9 und damit indirekt auch für den Verschleiß im Bereich der Wasserturbine 2.

## Patentansprüche

1. Vorrichtung (7) zum Erfassen des abrasiven Verschleißes an Bauteilen (21, 22) von Wasserturbinen (2), mit
einem Verschleißkörper (9), und
einer Messeinrichtung (13) zum Erfassen des Verschleißes an dem Verschleißkörper (9),
**dadurch gekennzeichnet, dass**
der Verschleißkörper (9) in der die Wasserturbine (2) durchströmenden Strömung angeordnet ist,
der Verschleißkörper als Sonotrode (9) ausgebildet und mit einem Ultraschallerzeuger (11) verbunden ist, und
die Messeinrichtung (13) zur Messung der Eigenfrequenz der Sonotrode (9) ausgebildet ist.

2. Vorrichtung (7) nach Anspruch 1, **dadurch gekennzeichnet, dass** die Sonotrode (9) in die von der Wasserturbine (2) abströmende Strömung ragt.

3. Vorrichtung (7) nach Anspruch 1 oder 2, **dadurch gekennzeichnet, dass** die Sonotrode (9) als zylindrischer Verschleißkörper mit einem Anschlusselement (17) zur Verbindung mit dem Ultraschallerzeuger (11) ausgebildet ist.

4. Vorrichtung (7) nach Anspruch 1, 2 oder 3, **dadurch gekennzeichnet, dass** die Sonotrode (9) auf ihrer dem Ultraschallerzeuger (11) abgewandten Seite kugelig (16) ausgebildet ist.

5. Vorrichtung (7) nach einem der Ansprüche 1 bis 4, **dadurch gekennzeichnet, dass** die Sonotrode (9) aus einem Stahlwerkstoff, insbesondere aus einem Chrom-Nickel- oder Chrom-Nickel-Molybdän-Stahl, besteht.

6. Vorrichtung (7) nach einem der Ansprüche 1 bis 4, **dadurch gekennzeichnet, dass** die Sonotrode (9) aus einem Nichteisenmetall, insbesondere aus einer Aluminium- oder Kupferlegierung, ausgebildet ist.

7. Vorrichtung (7) nach einem der Ansprüche 1 bis 6, **dadurch gekennzeichnet, dass** die Sonotrode (9) zumindest teilweise mit einer Hartstoffbeschichtung versehen ist.

8. Wasserkraftwerk (1) mit
wenigstens einer Wasserturbine (2), welche zwischen einem Druckrohr (4) in Strömungsrichtung vor der Wasserturbine (2) und einem Saugrohr (5) in Strömungsrichtung nach der Wasserturbine (2) angeordnet ist, und wenigstens einer Vorrichtung (7) zum Erfassen des abrasiven Verschleißes nach einem der Ansprüche 1 bis 7.

9. Wasserkraftwerk (1) nach Anspruch 8, **dadurch gekennzeichnet, dass** die Sonotrode (9) der Vorrichtung (7) im Saugrohr (5) angeordnet ist.

10. Wasserkraftwerk (1) nach Anspruch 9, **dadurch gekennzeichnet, dass** die Sonotrode (9) durch eine Öffnung (8) in dem Saugrohr (5) ragt und gegenüber der Öffnung (8) abgedichtet ist.

11. Wasserkraftwerk (1) nach einem der Ansprüche 8 bis 10, **dadurch gekennzeichnet, dass** die Sonotrode (9) stromabwärts eines Strömungsteilers (14) angeordnet ist.

12. Wasserkraftwerk (1) nach einem der Ansprüche 8 bis 11, **dadurch gekennzeichnet, dass** die Sonotrode (9) in einem von der Strömung durchströmten Rohrabschnitt innerhalb des oder parallel zu dem Saugrohr (5) angeordnet ist.

13. Wasserkraftwerk (1) nach Anspruch 12, **dadurch gekennzeichnet, dass** der Rohrabschnitt innerhalb des Saugrohrs (5) als Halbrohr (15) ausgebildet und an der Wandung (6) des Saugrohrs (5) befestigt ist.

14. Verfahren zum Erfassen des abrasiven Verschleißes in einem Wasserkraftwerk (1) nach einem der Ansprüche 8 bis 13, **dadurch gekennzeichnet, dass** mittels der Messeinrichtung (13) die Eigenfrequenz der Sonotrode (9) gemessen wird, wobei eine aufgrund des Materialabtrags an der Sonotrode (9) ansteigende Eigenfrequenz als Maß für einen zunehmenden Verschleiß von Bauteilen (21, 22) der Wasserturbine (2) des Wasserkraftwerks (1) verwendet wird.

15. Verfahren nach Anspruch 14, **dadurch gekennzeichnet, dass** ein mit dem Verschleiß korrelierendes Messsignal an eine Fernwartungseinrichtung (30) übertragen wird.

## Claims

1. A device (7) for detecting the abrasive wear on components (21, 22) of water turbines (2), having
a wearing body (9), and
a measuring unit (13) for detecting the wear on the wearing body (9), **characterized in that**
the wearing body (9) is arranged in the flow flowing through the water turbine (2),
the wearing body is implemented as a sonotrode (9) and is connected to an ultrasound generator (11), and
the measuring unit (13) is implemented to measure the resonant frequency of the sonotrode (9).

2. The device (7) according to Claim 1, **characterized in that** the sonotrode (9) protrudes into the flow flowing out of the water turbine (2).

3. The device (7) according to Claim 1 or 2, **characterized in that** the sonotrode (9) is implemented as a cylindrical wearing body having an attachment element (17) for the connection to the ultrasound generator (11).

4. The device (7) according to Claim 1, 2, or 3, **characterized in that** the sonotrode (9) is shaped spherical (16) on its side facing away from the ultrasound generator (11).

5. The device (7) according to one of Claims 1 to 4, **characterized in that** the sonotrode (9) consists of a steel material, in particular a chromium-nickel steel or chromium-nickel-molybdenum steel.

6. The device (7) according to one of Claims 1 to 4, **characterized in that** the sonotrode (9) is implemented from a nonferrous material, in particular from an aluminum alloy or copper alloy.

7. The device (7) according to one of Claims 1 to 6, **characterized in that** the sonotrode (9) is at least partially provided with a carbide coating.

8. A hydroelectric plant (1) having
at least one water turbine (2), which is arranged between a pressure pipe (4) in the flow direction upstream of the water turbine (2) and a suction pipe (5) in the flow direction downstream of the water turbine (2), and
at least one device (7) for detecting the abrasive wear according to one of Claims 1 to 7.

9. The hydroelectric plant (1) according to Claim 8, **characterized in that** the sonotrode (9) of the device (7) is arranged in the suction pipe (5).

10. The hydroelectric plant (1) according to Claim 9, **characterized in that** the sonotrode (9) protrudes through an opening (8) in the suction pipe (5) and is sealed in relation to the opening (8).

11. The hydroelectric plant (1) according to one of Claims 8 to 10, **characterized in that** the sonotrode (9) is arranged downstream of a flow divider (14).

12. The hydroelectric plant (1) according to one of Claims 8 to 11, **characterized in that** the sonotrode (9) is arranged in a pipe section, through which the flow flows, within the or parallel to the suction pipe (5).

13. The hydroelectric plant (1) according to Claim 12, **characterized in that** the pipe section is implemented within the suction pipe (5) as a half pipe (15) and is fastened on the wall (6) of the suction pipe (5).

14. A method for detecting the abrasive wear in a hydroelectric plant (1) according to one of Claims 8 to 13, **characterized in that** the resonant frequency of the sonotrode (9) is measured by means of the measuring unit (13), wherein a resonant frequency which rises as a result of the material abrasion on the sonotrode (9) is used as a measure for an increasing wear of components (21, 22) of the water turbine (2) of the hydroelectric plant (1).

15. The method according to Claim 14, **characterized in that** a measuring signal, which is correlated with the wear, is transmitted to a remote maintenance unit (30).

## Revendications

1. Dispositif (7) pour la détection de l'usure abrasive de composants (21, 22) de turbines hydrauliques (2), avec un corps d'usure (9) et un dispositif de mesure (13) destiné la détection de l'usure du corps d'usure (9), **caractérisé en ce que** le corps d'usure (9) est situé dans l'écoulement traversant la turbine hydraulique (2), que le corps d'usure est réalisé sous forme d'une sonotrode (9) et est lié à un générateur d'ultrasons (11) et que le dispositif de mesure (13) est conçu pour mesurer la fréquence propre de la sonotrode (9).

2. Dispositif (7) selon la revendication 1, **caractérisé en ce que** la sonotrode (9) se dresse dans l'écoulement provenant de la turbine hydraulique (2).

3. Dispositif (7) selon l'une des revendications 1 ou 2, **caractérisé en ce que** la sonotrode (9) est réalisée sous forme d'un corps d'usure cylindrique avec un élément de raccordement (17) servant à la liaison avec le générateur d'ultrasons (11 ).

4. Dispositif (7) selon l'une des revendications 1, 2 ou 3, **caractérisé en ce que** la sonotrode (9) est réalisée sous forme sphérique (16) en sa côté opposant le générateur d'ultrasons (11).

5. Dispositif (7) selon l'une des revendications 1 à 4, **caractérisé en ce que** la sonotrode (9) est composée d'un matériau acier, plus particulièrement d'un acier chrome-nickel ou chrome-nickel-molybdène.

6. Dispositif (7) selon l'une des revendications 1 à 4, **caractérisé en ce que** la sonotrode (9) est composée à base d'un métal non-ferreux, plus particulièrement à base d'un alliage d'aluminium ou de cuivre.

7. Dispositif (7) selon l'une des revendications 1 à 6, **caractérisé en ce que** la sonotrode (9) est pourvue, au moins en partie, d'une substance dure.

8. Centrale hydroélectrique (1) avec au moins une turbine hydraulique (2) qui est située entre une conduite forcée (4) en amont de la turbine hydraulique (2) et dans la direction d'écoulement et un tuyau d'aspiration (5) en aval de la turbine hydraulique (2) et dans le sens du flux et qui dispose d'au moins un dispositif (7) pour la détection de l'usure abrasive selon l'une des revendications 1 à 7.

9. Centrale hydroélectrique (1) selon la revendication 8, **caractérisée en ce que** la sonotrode (9) du dispositif (7) est disposée dans le tuyau d'aspiration (5).

10. Centrale hydroélectrique (1) selon la revendication 9, **caractérisée en ce que** la sonotrode (9) se dresse à travers d'une ouverture (8) du tuyau d'aspiration (5) et que la sonotrode (9) est étanche par rapport à ladite ouverture (8).

11. Centrale hydroélectrique (1) selon l'une des revendications 8 à 10, **caractérisée en ce que** la sonotrode (9) est disposée en aval d'un répartiteur d'écoulement (14).

12. Centrale hydroélectrique (1) selon l'une des revendications 8 à 11, **caractérisée en ce que** la sonotrode (9) est disposée dans une partie de tuyau traversée par le flux dans le tuyau d'aspiration (5) ou parallèle à ce dernier.

13. Centrale hydroélectrique (1) selon la revendication 12, **caractérisée en ce que** la partie tubulaire se trouvant dans le tuyau d'aspiration (5) est réalisée sous forme d'une demi-tubulure (15) et que cette partie est fixée à la paroi (6) du tuyau d'aspiration (5).

14. Procédé pour la détection de l'usure abrasive dans une centrale hydroélectrique (1) selon l'une des revendications 8 à 13, **caractérisé en ce que** la fréquence propre de la sonotrode (9) est mesurée via le dispositif de mesure (13), une fréquence propre qui augmente en raison de l'enlèvement de matière au niveau de la sonotrode (9) étant l'indicateur pour une usure croissante de composants (21, 22) de la turbine hydraulique (2) de la centrale hydroélectrique (1).

15. Procédé selon la revendication 14, **caractérisé en ce qu'**un signal de mesure en corrélation avec l'usure est transmis à un système de télémaintenance (30).
